# EUROPÄISCHE PATENTANMELDUNG

(11) **EP 4 242 930 A1**
(43) Veröffentlichungstag der Anmeldung: **13.09.2023**
(21) Anmeldenummer: 22160873.0
(22) Anmeldetag: 08.03.2022
(51) Int. Cl.: G06N 3/08, G06N 3/063

(54) **COMPUTERIMPLEMENTIERTES VERFAHREN ZUM INKREMENTELLEN TRAINIEREN EINES KÜNSTLICHEN NEURONALEN NETZES (KNN) MIT EINEM WIEDERHOLSPEICHER UND COMPUTERSYSTEM ZUM INKREMENTELLEN TRAINIEREN EINES KÜNSTLICHEN NEURONALEN NETZES MIT EINEM WIEDERHOLSPEICHER UND MIT EINEM TRAININGSMODUL**

(71) Anmelder: Basler AG, 22926 Ahrensburg (DE)
(72) Erfinder: LARSEN, Anna, 23562 Lübeck (DE); LUX, Pauline, 23564 Lübeck (DE)
(74) Vertreter: Eisenführ Speiser

(57) **Zusammenfassung**

Die vorliegende Erfindung betrifft ein computerimplementiertes Verfahren zum inkrementellen Trainieren eines künstlichen neuronalen Netzes mit einem Trainingsdatensatz, wobei das KNN in mehreren Trainingsphasen mit einem Trainingsmodul trainiert wird und wobei die mehreren Trainingsphasen in einer zeitlichen Reihenfolge nacheinander erfolgen, umfassend die Schritte: Trainieren eines KNN in einer ersten Trainingsphase mit einem gelabelten Trainingsdatensatz mit dem Trainingsmodul, wobei der gelabelte Trainingsdatensatz wenigstens erste Trainingsdaten aufweist, die einer Datenklasse zugeordnet sind, oder Bereitstellen eines trainierten KNN in dem Trainingsmodul, das in einer ersten Trainingsphase mit einem gelabelten Trainingsdatensatz trainiert wurde, wobei der erste Trainingsdatensatz wenigstens erste Trainingsdaten aufweist, die einer Datenklasse zugeordnet sind, und Trainieren des KNN in wenigstens einer weiteren Trainingsphase, wobei in der weiteren Trainingsphase die folgenden Trainingsschritte erfolgen: (a) Bereitstellen wenigstens eines Teils des gelabelten Trainingsdatensatzes zum Trainieren des KNN in einem Wiederholspeicher, (b) Entfernen eines Teils der Trainingsdaten aus dem Teil des bereitgestellten Trainingsdatensatzes, (c) Hinzufügen neuer Trainingsdaten in den Teil des Trainingsdatensatzes, um einen geänderten Trainingsdatensatz in dem Wiederholspeicher zum Trainieren des KNN bereitzustellen, und Trainieren des KNN mit dem geänderten Trainingsdatensatz mit dem Trainingsmodul für wenigstens eine Trainingsepoche, und (e) Wiederholen der Schritte (b), (c), und (d) mit dem geänderten Trainingsdatensatz, um das KNN für eine vorbestimmte Anzahl an Trainingsepochen zu trainieren, wobei Schritt (c) wenigstens ein einmaliges Hinzufügen von neuen Daten aus einer neuen Datenklasse umfasst und wobei die Trainingsphase abgeschlossen ist, wenn eine vorbestimmte Abbruchbedingung erreicht ist, und wobei der in dem Wiederholspeicher gespeicherte geänderte Trainingsdatensatz nach Abschluss der Trainingsphase als Abschlusstrainingsdatensatz für eine weitere Trainingsphase bereitgestellt ist. Die vorliegende Erfindung betrifft zudem Computersystem zum inkrementellen Trainieren eines KNN.

## Beschreibung

Die vorliegende Erfindung betrifft ein computerimplementiertes Verfahren zum inkrementellen Trainieren eines künstlichen neuronalen Netzes mit einem Trainingsdatensatz. Zudem betrifft die vorliegende Erfindung eine Trainingseinrichtung zum Trainieren eines künstlichen neuronalen Netzes.

Künstliche neuronale Netze (KNN) sind Stand der Technik für viele Anwendungen und haben Marktreife für industrielle Anwendungen erlangt, beispielsweise im Bereich Computer Vision. Dort werden KNN beispielsweise zur Bildklassifizierung eingesetzt. Klassifizieren bedeutet dabei das Zuordnen eines unbekannten Datensamples zu einer Datenklasse.

Moderne Architekturen von KNN, die sich vor allem auf Bilder als Datengrundlage beziehen, und die als Netzwerkarchitekturen bezeichnet werden können, sind beispielsweise Convolutional Neural Networks (CNN), die in weitere Unterklassen unterteilt werden können, wie in das Residual Network (ResNet) oder das VGG Network (z.B. VGG-16). Die genannten Netzwerke sind Beispiele für bekannte Netzwerkarchitekturen. Diese KNN erreichen für Problemstellungen der Klassifikation oder Detektion auf komplexen Datensätzen mit einigen hundert bis tausend Klassen, eine gute Performance.

Um eine gute Performance zu erreichen, müssen KNN trainiert werden. Hierzu sind verschiedene Lernverfahren bekannt, wie zum Beispiel überwachte Lernverfahren, nicht-überwachte Lernverfahren oder bestärkende Lernverfahren. Mit diesen Lernverfahren wird ein KNN beispielsweise so lange trainiert, bis sie eine spezielle Klassifikationsaufgabe mit ausreichender Genauigkeit bzw. Performanz lösen können. Diese Klassifikationsaufgabe wird nachfolgend auch als Task bezeichnet.

Im Bereich des maschinellen Lernens ist zudem das sogenannte inkrementelle Lernen bekannt. Als inkrementelles Lernen (engl. "Incremental Learning", IL) wird das kontinuierliche Lernen neuer Aufgaben bzw. über einen beliebig langen Zeitraum bezeichnet. Eine spezielle Form des inkrementellen Lernens ist dabei das sogenannte Klassen-inkrementelle Lernen (engl. "Class-Incremental Learning", CIL), bei der ein KNN nach und nach neue Klassifikationsaufgaben lösen bzw. lernen soll, und am Besten ohne die vorherigen Tasks zu vergessen.

Problematisch beim inkrementellen Lernen ist das sogenannte "Catastrophic Forgetting". Dieses Vergessen bezeichnet einen starken Performanzverlust auf den Klassen der zuvor gelernten Task, da diese nicht mehr in den Daten der darauffolgenden Tasks repräsentiert werden. Dies führt dazu, dass Klassen, die in den Trainingsdaten nicht vorkommen, auch nicht mehr oder nur noch selten von dem KNN vorhergesagt werden und bei fortschreitendem Training mit Daten anderer Klassen nahezu vollkommen vergessen werden. Anders als der Mensch besitzt ein KNN kein Gedächtnis, in dem Zusammenhänge über lange Zeiträume hinweg gespeichert werden können, sondern passt sich immer an die zuletzt gesehenen Daten an. Dieses Verhalten ist beim Klassen-inkrementelle Lernen jedoch unerwünscht und stellt somit ein großes Problem dar.

Aufgabe der vorliegenden Erfindung ist es deshalb, eines der oben genannten Probleme zu adressieren, den allgemeinen Stand der Technik zu verbessern oder eine Alternative zu bisher Bekanntem bereitzustellen. Insbesondere soll eine Lösung bereitgestellt werden, mit der ein Performanzverlust eines künstlichen neuronalen Netzes beim inkrementellen Lernen über mehrere Trainingsphasen reduziert wird.

Erfindungsgemäß wird dazu ein computerimplementiertes Verfahren zum inkrementellen Trainieren eines künstlichen neuronalen Netzes mit einem Trainingsdatensatz gemäß Anspruch 1 vorgeschlagen. Der Begriff künstliches neuronales Netz wird durch KNN abgekürzt. Das computerimplementierte Verfahren ist in einer besonderen Ausführungsform zur Erhöhung einer Klassifikationsgenauigkeit des KNN beim inkrementellen Lernen über mehrere Trainingsphasen geeignet. Es wird also ein Verfahren zur Erhöhung einer Klassifikationsgenauigkeit des KNN beim inkrementellen Lernen über mehrere Trainingsphasen vorgeschlagen.

Das Verfahren ist computerimplementiert, d.h. es wird ein Verfahren vorgeschlagen, das mit oder auf einem Computersystem bzw. computergestützt ausgeführt wird. Das KNN ist also in dem Computersystem implementiert und es ist trainierbar ausgebildet.

Das KNN wird dabei in mehreren Trainingsphasen mit einem Trainingsmodul trainiert, wobei die mehreren Trainingsphasen in einer zeitlichen Reihenfolge nacheinander erfolgen. Das Trainingsmodul ist Teil des Computersystems und es ist dazu eingerichtet, das in dem Computersystem hinterlegte KNN zu trainieren, beispielsweise durch Anpassung der Gewichte des KNN. Das Trainingsmodul ist beispielsweise Teil einer GPU oder einer CPU des Computersystems. Das Trainingsmodul ist dazu eingerichtet, das KNN in mehreren Trainingsphasen in einer zeitlichen Reihenfolge nacheinander zu trainieren. Das Trainingsmodul ist also ein Modul des Computersystems, das eine funktional geschlossene Einheit darstellt und einen bestimmten Dienst bereitstellt, nämlich das KNN zu trainieren. Wenn eine Trainingsphase abgeschlossen ist, ist das KNN dazu eingerichtet, eine erste Klassifikationsaufgabe zu lösen, die als Task bezeichnet wird. Es wird also ein inkrementelles Lernverfahren zum Trainieren eines KNN vorgeschlagen.

Das Verfahren umfasst den Schritt Trainieren eines KNN in einer ersten Trainingsphase mit einem gelabelten Trainingsdatensatz mit dem Trainingsmodul, wobei der gelabelte Trainingsdatensatz wenigstens erste Trainingsdaten aufweist, die einer Datenklasse zugeordnet sind.

Es wird also vorgeschlagen, dass in dem Computersystem hinterlegte KNN in einer ersten Trainingsphase zu trainieren, bis es eine erste Klassifikationsaufgabe bzw. einen ersten Task gelernt hat. Beispielsweise ist das KNN nach der ersten Trainingsphase dazu eingerichtet, unbekannte Daten in zehn verschiedene Klassen zu klassifizieren. Die erste Trainingsphase kann auch als initiale Trainingsphase aufgefasst werden. Das Trainieren des KNN in der ersten Trainingsphase kann dabei mit einem bekannten Trainingsverfahren umgesetzt werden. Beispielsweise erfolgt das Trainieren des KNN in einer der ersten Trainingsphasen mittels einem überwachten Lernverfahren, bei dem eine Kostenfunktion durch Anpassung von Gewichten des KNN optimiert wird, wobei die Kostenfunktion mittels einem Optimierungsverfahren optimiert wird, insbesondere mit einem Gradientenabstiegsverfahren,

Der gelabelte Trainingsdatensatz weist dabei wenigstens erste Trainingsdaten auf, die einer Datenklasse zugeordnet sind. Ein gelabelter Trainingsdatensatz ist ein Datensatz, der aus gelabelten Trainingsdaten ausgebildet ist. Trainingsdaten sind Daten, die zum Trainieren des KNN verwendet werden. Unter gelabelten Daten werden sowohl unabhängige Variablen (Features) als auch abhängige Variablen (Label) verstanden. Das Label fließt mit in das Modelltraining des KNN ein, damit das trainierte Modell bzw. KNN bei neuen Daten (ohne Label) das Label vorhersagen kann. Durch die Formulierung "wenigstens erste Trainingsdaten" wird zum Ausdruck gebracht, dass der Trainingsdatensatz auch weitere Trainingsdaten aufweisen kann, beispielsweise zweite, dritte, vierte Trainingsdaten usw., die jeweils weiteren Datenklassen zugeordnet sind, also zum Beispiel einer zweiten, dritten und vierten Datenklasse usw.

Als ein alternativer Schritt wird vorgeschlagen, dass ein Bereitstellen eines trainierten KNN in dem Trainingsmodul erfolgt, das in einer ersten Trainingsphase mit einem gelabelten Trainingsdatensatz trainiert wurde, wobei der gelabelte Trainingsdatensatz wenigstens erste Trainingsdaten aufweist, die einer Datenklasse zugeordnet sind.

Es wird also vorgeschlagen, dass, anstatt ein KNN in einer ersten Trainingsphase zu trainieren, ein bereits vortrainiertes KNN zu verwenden, das mit einem gelabelten Trainingsdatensatz trainiert. Der gelabelte Trainingsdatensatz steht für das inkrementelle Trainingsverfahren für weitere Trainingsphasen zur Verfügung. Das vortrainierte KNN wurde also bereits in einer ersten Trainingsphase trainieren, bis es eine erste Klassifikationsaufgabe bzw. einen ersten Task gelernt hat.

Zudem umfasst das Verfahren den Schritt Trainieren des KNN in wenigstens einer weiteren Trainingsphase, wobei in der weiteren Trainingsphase weitere Trainingsschritte erfolgen, die nachfolgend beschrieben werden.

Es wird also vorgeschlagen, ein trainiertes KNN nochmal zu trainieren, nachdem es die erste Klassifikationsaufgabe bzw. einen ersten Task bereits gelernt hat. Das Trainieren in der weiteren Trainingsphase dient dem Zweck, dem KNN wenigstens eine neue Klassifikationsaufgaben bzw. Task beizubringen, den es zuvor noch nicht gelernt hat.

Das Verfahren umfasst dabei den Trainingsschritt (a) Bereitstellen wenigstens eines Teils des gelabelten Trainingsdatensatzes zum Trainieren des KNN in einem Wiederholspeicher.

Es wird also vorgeschlagen, dass das KNN auf Basis des gelabelten Datensatz aus der vorherigen Trainingsphase trainiert wird, wobei wenigstens ein Teil des gelabelten Trainingsdatensatzes in einem Wiederholspeicher bereitgestellt wird. Der Wiederholspeicher ist ein Datenspeicher für Trainingsdaten, mit denen das KNN trainiert wird. Der Wiederholspeicher kann auch als Trainingsdatenspeicher verstanden werden. Der in dem Wiederholspeicher bereitgestellte Trainingsdatensatz wird in der Trainingsphase und auch über mehrere Trainingsphasen hinweg wiederholt dem KNN zum Trainieren zugeführt. Aus diesem Grund wird der Datenspeicher für Trainingsdaten als Wiederholspeicher bezeichnet.

Ein weiterer Trainingsschritt (b) ist Entfernen eines Teils der Trainingsdaten aus dem Teil des bereitgestellten Trainingsdatensatzes.

Es wird also vorgeschlagen, dass bevor das KNN mit dem Trainingsdatensatz aus dem Wiederholspeicher trainiert wird, zunächst Daten aus dem Datensatz gelöscht werden. Das Entfernen kann dabei ein Löschen sein oder ein Ersetzen von Daten. Das Entfernen der Trainingsdaten kann dabei zufällig bzw. willkürlich erfolgen, beispielsweise mit einem Zufallsalgorithmus, und/oder das Entfernen der Trainingsdaten kann vorbestimmt erfolgen, beispielsweise mit einem Auswahlalgorithmus. Die Menge an Daten, die aus den Trainingsdaten entfernt wird, ist dabei vorzugsweise vorbestimmt, das heißt festgelegt. Beispielsweise kann eine Gesamtmenge von 5% der Trainingsdaten entfernt werden. Es wird also vorgeschlagen, dass die in dem Wiederholspeicher gespeicherten bzw. bereitgestellten Daten teilweise gelöscht werden. Das Entfernen kann beispielsweise mit einem dazu eingerichteten Entfernungsmodul durchgeführt werden, dass auf bzw. in dem Computersystem implementiert ist und das auch als Löschmodul aufgefasst werden kann. Das Entfernungsmodul ist ein Modul des Computersystems, das eine funktional geschlossene Einheit darstellt und einen bestimmten Dienst bereitstellt, nämlich Trainingsdaten aus dem in dem Wiederholspeicher bereitgestellten Trainingsdatensatz zu löschen.

Ein weiterer Trainingsschritt (c) ist Hinzufügen neuer Trainingsdaten in den Teil des bereitgestellten und gelabelten Trainingsdatensatzes, um einen geänderten Trainingsdatensatz in dem Wiederholspeicher zum Trainieren des KNN bereitzustellen.

Es wird also vorgeschlagen, dass neue Trainingsdaten in den im Wiederholspeicher gespeicherten Trainingsdatensatz eingefügt werden, also Neudaten in den Wiederholspeicher hinzugefügt werden. Die eingefügten Daten können beispielsweise aus einem Trainingsdatenspeicher entstammen oder aus einer Neudatenerfassung entstammen. Als neue Trainingsdaten werden dabei Trainingsdaten verstanden, die zuvor noch nicht Bestandteil des Trainingsdatensatzes waren und können auch als Neudaten aufgefasst werden. Umfasst der bereitgestellte Datensatz beispielsweise Daten aus einem Datensatz X, entstammen die hinzugefügten Daten aus einem anderen Datensatz, beispielsweise aus dem Datensatz Y. Der geänderte Trainingsdatensatz ist der bereitgestellte Datensatz mit dem Unterschied, dass aus ihm ein Teil der Trainingsdaten entfernt wurde und neue Trainingsdaten eingefügt wurden. Beispielsweise können die hinzugefügten neuen Daten aus einem zweiten gelabelten Datensatz Y entstammen, in denen Trainingsdaten mit zehn neuen bzw. anderen Datenklassen vorhanden sind. Der geänderte Trainingsdatensatz weist somit im Vergleich zu dem unveränderten Trainingsdatensatz mehr Datenklassen auf, nämlich die Datenklassen des unveränderten Trainingsdatensatzes und die Datenklassen, die mit den neuen Daten hinzugefügt wurden.

Das Hinzufügen kann beispielsweise mit einem dazu eingerichteten Hinzufügungsmodul durchgeführt werden, dass auf bzw. in dem Computersystem implementiert ist. Das Hinzufügungsmodul ist ein Modul des Computersystems, das eine funktional geschlossene Einheit darstellt und einen bestimmten Dienst bereitstellt, nämlich neue Daten in den Wiederholspeicher einzufügen. Dazu kann das Hinzufügungsmodul mit einem Trainingsdatenspeicher oder einer Neudatenerfassung datentechnisch gekoppelt sein. Das Hinzufügen kann also auch als sequenzielles Einspeisen von Neudaten in den Trainingsprozess verstanden werden.

Ein weiterer Trainingsschritt (d) ist Trainieren des KNN mit dem geänderten Trainingsdatensatz mit dem Trainingsmodul für wenigstens eine Trainingsepoche.

Das Trainieren des KNN kann mit bekannten Trainingsverfahren durchgeführt werden. Trainieren eines KNN kann dabei auch verstanden werden als Anpassen der Gewichte des KNN bis eine vorbestimmte Abbruchbedingung erfüllt ist. Die vorbestimmte Abbruchbedingung ist zumeist durch eine Kostenfunktion bestimmt, die auch als Verlustfunktion bekannt ist. Die Gewichte des KNN werden einfach gesprochen so lange angepasst, bis die Kostenfunktion so weit optimiert ist, dass der Verlust minimal ist. Das Trainieren kann beispielsweise mit einem bzw. dem zuvor beschriebenen Trainingsmodul erfolgen. Das Trainieren erfolgt dabei für wenigstens eine Epoche bzw. Trainingsepoche, was ein Fachbegriff aus dem Bereich des maschinellen Lernens ist. Eine Epoche ist abgeschlossen, wenn der gesamte Trainingsdatensatz, bzw. vorliegend der geänderte Trainingsdatensatz, vollständig dem KNN gezeigt bzw. der vollständige Trainingsdatensatz eingefügt wird. Es ist dabei bekannt, dass nicht der gesamte Datensatz auf einmal in das KNN eingegeben wird, sondern die Daten batchweise in das KNN eingegeben werden, um das KNN nach und nach mit dem Trainingsdatensatz zu trainieren, bis der gesamte Trainingsdatensatz für das Training verwendet wurde und die Epoche bzw. Trainingsepoche abgeschlossen ist.

Ein weiterer Trainingsschritt (e) ist Wiederholen der Schritte (b), (c), und (d) mit dem geänderten Trainingsdatensatz, um das KNN für eine vorbestimmte Anzahl an Trainingsepochen zu trainieren, wobei Schritt (c) wenigstens ein einmaliges Hinzufügen von neuen Daten aus einer neuen Datenklasse umfasst und wobei die Trainingsphase abgeschlossen ist, wenn eine vorbestimmte Abbruchbedingung erreicht ist, und wobei der in dem Wiederholspeicher gespeicherte geänderte Trainingsdatensatz nach Abschluss der Trainingsphase als Abschlusstrainingsdatensatz für eine weitere Trainingsphase bereitgestellt ist.

Es wird also vorgeschlagen, dass der geänderte Trainingsdatensatz, nachdem das KNN mit dem geänderten Trainingsdatensatz trainiert wurde, erneut geändert wird. Das erneute Ändern erfolgt dabei wie zuvor zu den Schritten (b), (c) beschrieben. Es werden zuerst Daten aus dem geänderte Trainingsdatensatz entfernt und anschließend neue Daten in den geänderten Trainingsdatensatz eingefügt. Damit wird sozusagen ein geänderter, geänderter Trainingsdatensatz erzeugt, mit dem dann in dem Schritt (d) das KNN erneut trainiert wird. Das KNN wurde dann beispielsweise zwei Epochen lang trainiert. Diese Schritte können beliebig häufig wiederholt werden, bis die Trainingsphase abgeschlossen ist.

Der Schritt (c) bzw. der Schritt Hinzufügen neuer Trainingsdaten in den Teil des Trainingsdatensatzes umfasst dabei wenigstens ein einmaliges Hinzufügen von neuen Daten aus einer neuen Datenklasse. Es wird also vorgeschlagen, dass in den gelabelten Datensatz, wenigstens einmal Daten hinzugefügt werden, die eine neue Datenklasse umfassen. Es wird also vorgeschlagen, dass nicht jedes Mal, wenn Schritt (c) durchgeführt wird, neue Daten mit einer neuen Datenklassen hinzugefügt werden, sondern es werden pro Trainingsphase nur einmal neue Trainingsdaten mit einer neuen Trainingsklassen hinzugefügt. Es wird also vorgeschlagen, dass in jeder Trainingsphase neue Datenklassen dem gelabelten Trainingsdatensatz hinzufügt werden, aber nicht innerhalb der Trainingsphase immer wieder neue Datenklassen hinzugefügt werden.

Die Trainingsphase ist dabei abgeschlossen, wenn eine vorbestimmte Abbruchbedingung erreicht ist. Eine vorbestimme Abbruchbedingung ist beispielsweise ein Erreichen einer vorbestimmten Anzahl an Trainingsepochen, beispielsweise wenn die Schritte (b) bis (d) zwanzig Mal wiederholt wurden. In diesem Beispiel wäre das KNN dann zwanzig Mal für eine Epoche trainiert worden. Wenn in diesem Beispiel die vorbestimmte Anzahl von Iterationsschleifen erreicht wurde, liegt der zuletzt geänderte Trainingsdatensatz als Abschlusstrainingsdatensatz vor, der besondere Eigenschaften aufweist. Die Abbruchbedingung kann aber auch eine gewünschte Klassifikationsgenauigkeit, eine vorbestimmte Zeitdauer oder dergleichen sein.

Ist die vorbestimmte Abbruchbedingung eingetreten, ist der in dem Wiederholspeicher gespeicherte geänderte Trainingsdatensatz nach Abschluss der Trainingsphase als Abschlusstrainingsdatensatz für eine weitere Trainingsphase bereitgestellt ist.

Ein weiterer optionaler Verfahrensschritt ist Trainieren des KNN in wenigstens einer weiteren Trainingsphase, wobei in der weiteren Trainingsphase die Schritte (b) bis (e) erneut mit dem Abschlusstrainingsdatensatz aus der vorherigen Trainingsphase ausgeführt werden.

Es wurde vorliegend erkannt, dass durch das wiederholte Entfernen alter Daten und das Hinzufügen neuer Daten eine besonders vorteilhafte Klassenverteilung in dem Abschlusstrainingsdatensatz entsteht. Dadurch, dass nur Neudaten in den Trainingsdatensatz eingefügt werden, steigt mit zunehmender Anzahl an Trainingsepochen der Anteil der neuen Daten im Trainingsdatensatz an. Das KNN wird aber nicht ausschließlich mit neuen Daten trainiert, sondern der Datensatz umfasst auch weiterhin alte Daten aus dem initial bereitgestellten Trainingsdatensatz bzw. aus den vorherigen Trainingsphasen. In jeder Trainingsepoche wird das KNN also mit den neuen Daten trainiert sowie auch mit alten Daten. Mit dem vorgeschlagenen Verfahren wird also im Grunde erreicht, dass das Gedächtnis des KNN im Trainingsdatensatz des Wiederholspeichers implementiert wird. Der im Wiederholspeicher gespeicherte Trainingsdatensatz umfasst nämlich über die Trainingsphasen hinweg, Daten aus jeder vorherigen Trainingsphase, mit einer vorteilhaften Klassenverteilung. So wird das KNN in jeder Trainingsphase mit Trainingsdaten aus den vorherigen Trainingsphasen anteilig trainiert und alte bereits gelernte Klassifikationsaufgaben weniger schnell vergessen, da durch den Anteil der Alten das KNN nachtrainiert wird. Das KNN wird also nochmal mit alten Daten trainiert, mit denen es zuvor schon trainiert wurde, aber nicht mit so einem großen Anteil, wie die neuen Daten. Es wird also ein besonderes Datenmanagement vorgeschlagen, dass zur Erhöhung einer Klassifikationsgenauigkeit über mehrere Trainingsphasen hinweg beiträgt.

Vorzugsweise umfasst das Entfernen des Teils der Daten aus dem Trainingsdatensatz des Wiederholspeichers in Schritt (b) den Schritt Ausführen eines Zufallsalgorithmus, der beliebige Daten aus dem Trainingsdatensatz zufällig entfernt.

Es wird also vorgeschlagen, dass das Entfernen willkürlich erfolgt. Dies bedeutet auch, dass wenn Neudaten in dem Trainingsdatensatz vorhanden sind, auch die Neudaten, die gerade erst hinzugefügt wurden, wieder entfernt wurden. Dadurch, dass zunächst der Anteil der Neudaten relativ gering ist, liegt eine höhere Wahrscheinlichkeit vor, dass alte Daten aus dem Trainingsdatensatz entfernt werden. Mit steigender Epochenanzahl nimmt der Anteil an Neudaten in dem Trainingsdatensatz zu. Aufgrund des zufälligen Löschens entsteht so eine besonders vorteilhafte Klassenverteilung in dem Trainingsdatensatz. Der Zufallsalgorithmus kann dabei in dem Entfernungsmodul implementiert sein.

Zusätzlich oder alternativ umfasst vorzugsweise das Entfernen des Teils der Daten aus dem Trainingsdatensatz des Wiederholspeichers in Schritt (b) den Schritt Ausführen eines Auswahlalgorithmus, der vorbestimmte Daten aus dem Trainingsdatensatz auf Basis einer Auswahlvorschrift entfernt.

Es wird also vorgeschlagen, dass das Entfernen mit einem vorbestimmten Algorithmus erfolgt.

In einer besonders bevorzugten Ausführungsform ist der Auswahlalgorithmus ein Algorithmus, der eine Klassenverteilung in dem Trainingsdatensatz feststellt und ein Entfernen der Daten auf Basis der festgestellten Klassenverteilung durchführt.

Es wird also vorgeschlagen, dass ein Algorithmus verwendet wird, der feststellen kann, wie viele Trainingsdaten aus den jeweiligen Trainingsklassen vorhanden sind. Sind mehr Trainingsdaten einer Klasse vorhanden, kann der Algorithmus veranlassen, mehr Trainingsdaten aus dieser Klasse zu entfernen als von Trainingsdaten einer anderen Klasse, von denen weniger Trainingsdaten vorhanden sind.

Zusätzlich oder alternativ ist der Auswahlalgorithmus ein Algorithmus, der mit Klassenminimalgrenzen dazu eingerichtet ein vollständiges Entfernen von Daten einer Datenklasse aus dem Trainingsdatensatz zu verhindern. Es wird also vorgeschlagen, dass eine Minimalgrenze für Daten einer Klasse vorgesehen wird. So wird gewährleistet, dass Daten einer bestimmten Datenklasse nicht vollständig aus dem Trainingsdatensatz des Wiederholspeichers entfernt werden.

In einer besonders bevorzugten Ausführungsform ist der Auswahlalgorithmus ein Algorithmus, der eine zeitliche Reihenfolge der Daten des Trainingsdatensatz feststellt und ein Entfernen der Daten auf Basis der festgestellten zeitlichen Reihenfolge durchführt. Beispielsweise werden ältere Daten bevorzugt aus dem Datensatz entfernt.

Zusätzlich oder alternativ umfasst vorzugsweise das Entfernen des Teils der Daten aus dem Trainingsdatensatz des Wiederholspeichers in Schritt (b) den Schritt Ausführen eines Sperralgorithmus, der neu hinzugefügte Daten aus dem Trainingsdatensatz für eine vorbestimmte Zeit gegen ein Entfernen sperrt und nicht gesperrte Daten ganz oder teilweise aus dem Trainingsdatensatz entfernt. Es wird also ein Algorithmus vorgeschlagen, der verhindert, dass gerade erst hinzugefügte Daten sofort wieder gelöscht werden. Dies hat den Vorteil, dass das KNN den neuen Task schneller lernt, da mehr Neudaten aufgrund der Sperre zum Training zu Verfügung stehen. Die vorbestimmte Zeit kann durch eine festgelegte Epochenanzahl vorbestimmt sein.

Vorzugsweise umfasst das Hinzufügen neuer Trainingsdaten in den Trainingsdatensatz in Schritt (c) den Schritt Hinzufügen neuer Trainingsdaten aus einem Trainingsdatenspeicher, der die neuen Trainingsdaten umfasst.

Es wird also vorgeschlagen, dass die neuen Daten aus einem Datenspeicher in den Wiederholspeicher eingegeben werden, in dem die Neudaten gespeichert sind. Der Trainingsdatenspeicher kann beispielsweise Teil einer Trainingsdatenbank oder ein Zwischenspeicher für Trainingsdaten sein.

Zusätzlich oder alternativ umfasst vorzugsweise das Hinzufügen neuer Trainingsdaten in den Trainingsdatensatz in Schritt (c) den Schritt Hinzufügen neuer Trainingsdaten aus einer Neudatenerfassung umfasst.

Es wird also vorgeschlagen, dass die neuen Trainingsdaten von einer Neudatenerfassung in den Wiederholspeicher eingegeben werden. Es wird also vorgeschlagen, dass neue Daten kontinuierlich mit der Neudatenerfassung erfasst werden und diese in den Trainingsepochen bzw. Trainingsphasen nach und nach berücksichtigt werden. In einer besonders bevorzugten Ausführungsform ist die Neudatenerfassung mit einem Endgerät dazu eingerichtet, neue Trainingsdaten zu erfassen, wobei das Endgerät insbesondere ein Kamerasystem oder ein sonstiges Sensorsystem ist, je nach Anwendungsgebiet des KNN.

Vorzugsweise entspricht eine Menge der neu hinzugefügten Trainingsdaten im Wesentlichen einer Menge der zuvor aus dem Trainingsdatensatz entfernten Trainingsdaten, um eine Gesamtdatenmenge des Trainingsdatensatz im Wesentlichen gleich zu halten.

Es wird also vorgeschlagen, dass die Menge an Daten, die aus dem Trainingsdatensatz entfernt wird, der Menge an Daten entspricht, die in den Trainingsdatensatz hinzugefügt werden. Damit bleibt die Gesamtdatenmenge des Trainingsdatensatz im Wesentlichen gleich. Dies ist besonders vorteilhaft, da der Trainingsdatensatz in dem Wiederholspeicher nicht anwächst und über mehrere Trainingsphasen hinweg nicht eine Vergrößerung des Wiederholspeichers vorgenommen werden muss.

Vorzugsweise umfasst das Bereitstellen des gelabelten Trainingsdatensatzes in Schritt (a) den Schritt Auswählen des wenigstens einen Teils des gelabelten Trainingsdatensatzes mit einer Auswahleinrichtung, so dass eine ausgewählte Gesamtdatenmenge des ausgewählten Teils im Wesentlichen der maximalen Datenspeicherkapazität des Wiederholspeichers entspricht.

Es wird also vorgeschlagen, dass der Wiederholspeicher vollständig mit Trainingsdaten gefüllt wird, um dessen Kapazität vollständig auszunutzen.

Vorzugsweise wird das Trainieren des KNN in der ersten Trainingsphase und/oder in der weiteren Trainingsphase mit einem Computersystem ausgeführt, das wenigstens den Wiederholspeicher und das Trainingsmodul umfasst.

Weiter bevorzugt ist das Computersystem mit einer GPU und/oder einer CPU zum Ausführen des Verfahrens eingerichtet.

Es wird also vorgeschlagen, dass das Computersystem das Verfahren mit einem Grafikprozessor ausführt, der sich besonders gut aufgrund seiner hohen Rechengeschwindigkeit zum Ausführen des Verfahrens eignet. Das Verfahren kann aber auch zusätzlich oder alternativ mit einem Prozessor (engl. "Central Processing Unit") ausgeführt werden.

Vorzugsweise ist das in der ersten Trainingsphase und/oder ist das in der weiteren Trainingsphase zu trainierende KNN ein tiefes KNN.

Ein tiefes KNN liegt vor, wenn es mehr als zwei versteckte Schichten aufweist. Zudem ist bekannt, dass das KNN eine Eingangsschicht und eine Ausgangsschicht aufweist, also auch das zuvor beschriebene KNN, das mit dem inkrementellen Trainingsverfahren trainiert wird.

Das zu trainierende KNN ist vorzugsweise zur Bildklassifikation eingerichtet. Es wird also vorgeschlagen, ein bildverarbeitendes KNN zu verwenden. Es versteht sich, dass der Trainingsdatensatz in diesem Fall ein Bilddatensatz ist.

In einer besonders bevorzugten Ausführungsform ist das zu trainierende KNN ein faltendes KNN (CNN), ein rekurrentes neuronales Netz (RNN), ein residuales neuronales Netz (ResNet) oder dergleichen.

Vorzugsweise erfolgt das Trainieren des KNN mit dem bereitgestellten Trainingsdatensatz mit dem Trainingsmodul in einer oder allen Trainingsphasen mittels einem überwachten Lernverfahren, bei dem eine Kostenfunktion durch Anpassung von Gewichten des KNN optimiert wird.

Weiter bevorzugt wird die Kostenfunktion mittels eines Optimierungsverfahren optimiert.

In einer besonders bevorzugten Ausführungsform wird die Kostenfunktion mit einem Gradientenabstiegsverfahren, einem Stochastischen Gradientenabstieg, einem Batch-Gradientenabstieg, einem Mini-Batch-Gradientenabstieg, einem Levenberg-Marquardt Algorithmus oder dergleichen optimiert. Dies sind bekannte Optimierungsverfahren zum Optimieren einer Kostenfunktion.

Vorzugsweise weist der Trainingsdatensatz eine Vielzahl von Trainingsdaten auf, die jeweils einer Vielzahl erster Datenklassen zugeordnet sind, und die neu hinzugefügten Trainingsdaten eine Vielzahl von Trainingsdaten umfassen, die jeweils einer Vielzahl zweiter Datenklassen zugeordnet sind, wobei vorzugsweise die ersten Datenklassen von den zweiten Datenklassen verschieden sind.

Es wird also vorgeschlagen, dass das KNN eine Vielzahl von Klassen in der ersten Trainingsphase erlernt und zudem eine Vielzahl von anderen Klassen in der weiteren Trainingsphase lernt. Beispielsweise lernt das KNN in der ersten Trainingsphase zehn Datenklassen zu unterscheiden und in einer weiteren Trainingsphase weitere zehn Datenklassen. Nach der weiteren Trainingsphase ist das KNN dann dazu eingerichtet, ungelabelte/unbekannte Daten bzw. Datensamples (Testdaten) in zwanzig Datenklassen zu klassifizieren.

Vorzugsweise ist der gelabelte Trainingsdatensatz ein Bilddatensatz, und die Trainingsdaten sind gelabelte Bilddaten.

Vorzugsweise ist die Abbruchbedingung ein Erreichen einer vorbestimmten Anzahl an Trainingsepochen in einer Trainingsphase ist, und/oder ein Erreichen einer vorbestimmten Zeitdauer, und/oder ein Erreichen einer vorbestimmten Klassifikationsgenauigkeit, die mit einem Testdatensatz geprüft wird, der in das KNN eingegeben wird.

Es wird also vorgeschlagen, dass die Abbruchbedingung vorliegt, wenn eine vorbestimmte Anzahl an Trainingsepochen in einer Trainingsphase durchgeführt wurde, also zum Beispiel 90 Epochen, und/oder die Abbruchbedingung vorliegt, wenn eine vorbestimmte Zeitdauer erreicht wurde, und/oder die Abbruchbedingung vorliegt, wenn eine ausreichende Genauigkeit erreicht wurde. Die Abbruchbedingung kann auch ein Schwellenwert für die zu optimierende Kostenfunktion sein.

Erfindungsgemäß wird zudem ein Computersystem mit einem Wiederholspeicher und mit einem Trainingsmodul vorgeschlagen, wobei das Computersystem mit dem Wiederholspeicher und dem Trainingsmodul zum Ausführen des Verfahrens nach einer der vorstehenden Ausführungsformen eingerichtet.

Hinsichtlich der beschriebenen Vorteile, bevorzugten Ausführungsformen und Einzelheiten zum Computersystem wird auf die entsprechenden oben beschriebenen Vorteile, bevorzugten Ausführungsformen und Einzelheiten zu dem inkrementellen Lernverfahren verwiesen.

Vorzugsweise ist das Computersystem ein Computer Vision System.

Vorzugsweise sind der Wiederholspeicher und das Trainingsmodul in einer GPU oder in einer CPU eingerichtet.

Vorzugsweise ist der Wiederholspeicher als nicht-flüchtiger Speicher ausgebildet und ist dazu eingerichtet, für mehrere Trainingsphasen dauerhaft zu speichern.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden:
- Fig. 1: zeigt schematisch das Grundprinzip von inkrementellem Lernen.
- Fig. 2: zeigt schematisch drei verschiedene Trainingsdatensätze X, Y und Z.
- Fig. 3: zeigt schematisch ein Computersystem mit einem Wiederholspeicher und einem Trainingsmodul in einer Ausführungsform.
- Fig. 4: zeigt schematisch ein Ablaufdiagramm des computerimplementierten Verfahrens zum inkrementellen Trainieren eines KNN.
- Fig. 5A-G: veranschaulichen schematisch die jeweiligen Trainingsschritte des computerimplementierten Verfahrens zum inkrementellen Trainieren eines KNN in einer sequenziellen Darstellungsweise und ein Trainieren des KNN in einer Trainingsphase P1.
- Fig. 6: veranschaulicht schematisch die jeweiligen Trainingsschritte des computerimplementierten Verfahrens zum inkrementellen Trainieren eines KNN in einer zeitlichen Übersichtsdarstellung in einer Trainingsphase P1.
- Fig. 7A-D: veranschaulichen schematisch die jeweiligen Trainingsschritte des computerimplementierten Verfahrens zum inkrementellen Trainieren eines KNN in einer sequenziellen Darstellungsweise und ein Trainieren des KNN in einer Trainingsphase P2.
- Fig. 8: veranschaulicht schematisch die jeweiligen Trainingsschritte des computerimplementierten Verfahrens zum inkrementellen Trainieren eines KNN in einer zeitlichen Übersichtsdarstellung in einer Trainingsphase P2.

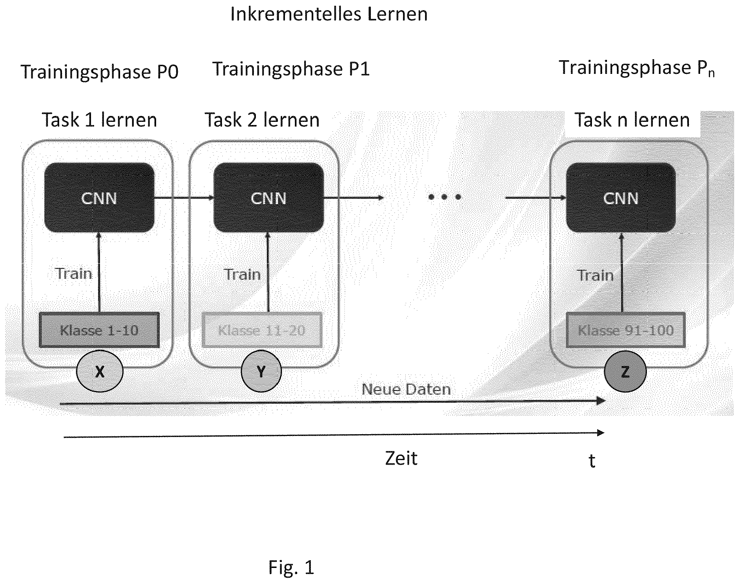

Figur 1 zeigt schematisch das Grundprinzip von inkrementellem Lernen. Als inkrementelles Lernen wird das kontinuierliche Lernen neuer Aufgaben über einen beliebig langen Zeitraum bezeichnet. Inkrementelles Lernen richtet sich an Szenarien bei denen nicht alle Trainingsdaten eines Künstlichen Neuronalen Netzes (KNNs) bereits vor der Inferenz vorhanden oder zugänglich sind. Das heißt auch nach der Anwendung beziehungsweise dem praktischen Einsatz des KNNs soll es möglich sein, neue Daten in das Netz einzuspeisen und dieses erneut zu trainieren. Das Training ist hierbei nicht online, sondern wird zu einem festgelegten Zeitpunkt auf einem statischen Datensatz ausgeführt. Die Figur 1 zeigt dabei, dass zunächst das jeweilige Model bzw. KNN auf dem ersten Datensatz X trainiert wird und es danach in der Lage sein soll bzw. ist, eine vorher definierte Task 1 zu lösen, nämlich eine erste Klassifikationsaufgabe. Fortlaufend soll dann zu jedem Zeitschritt t ein neuer Datensatz Y, Z hinzugefügt werden können, dem jeweils ein anderer Task zugeordnet ist. Jede dieser Tasks entspricht einer Klassifikationsaufgabe. Idealerweise soll der Vorgang des Hinzufügens neuer Klassen unendlich oft möglich sein. In dem gezeigten Ausführungsbeispiel der Figur 1 lernt das KNN, das beispielhaft als faltendes künstliches neuronales Netz (CNN) dargestellt ist, in einer ersten Trainingsphase P0 unbekannte Daten in zehn Klassen zu unterscheiden. Nachdem die Trainingsphase P0 abgeschlossen ist, ist das KNN also dazu eingerichtet, die Klassifikationsaufgabe zu erfüllen. Anschließend erfolgt in der weiteren Trainingsphase P1 ein erneutes Trainieren des KNN mit einem anderen Datensatz Y, der neue Datenklassen aufweist, die das KNN in der ersten Trainingsphase noch nicht kannte. Das KNN soll also in der Trainingsphase P1 lernen, neben den Klassen 1 bis 10 auch noch die neuen Klassen 11 bis 20 zu unterscheiden. Nach Abschluss der Trainingsphase P1 ist das KNN dann dazu eingerichtet, den Task 1 und den Task 2 zu erfüllen. Das inkrementelle Lernen wird dann für beliebig viele Trainingsphasen Pₙ wiederholt. Idealerweise sollte der Vorgang des Hinzufügens neuer Klassen beliebig oft möglich sein.

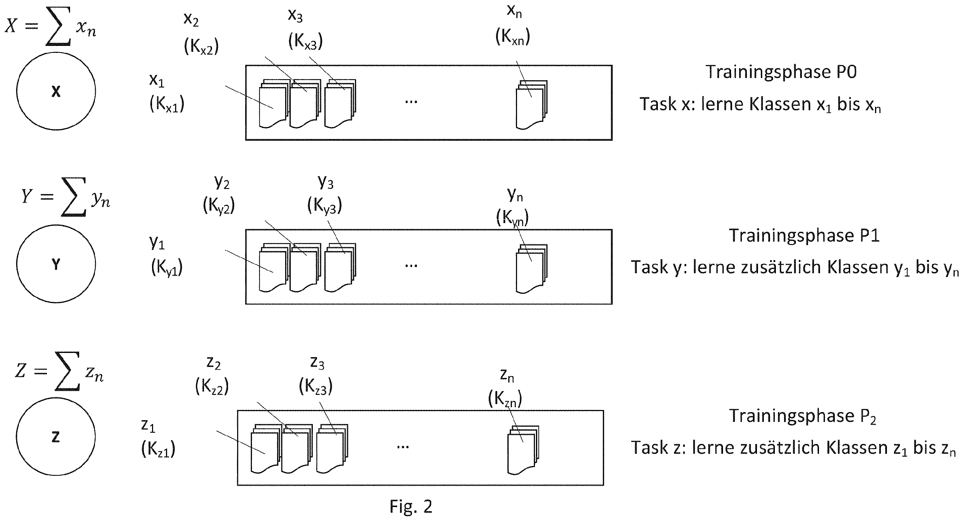

Figur 2 zeigt schematisch drei verschiedene Datensatz und dient zur Veranschaulichung, wie ein gelabelter Datensatz bzw. Trainingsdatensatz ausgebildet ist. Es sind drei Trainingsdatensätze X, Y und Z veranschaulicht. Der Trainingsdatensatz X ist ein Trainingsdatensatz der zum Trainieren des KNN in der ersten Trainingsphase P0 verwendet wird. Der Trainingsdatensatz X ist aus einer Vielzahl von Trainingsdaten x₁, x₂ ... xₙ ausgebildet. Die Summe der Trainingsdaten xₙ entspricht also der Gesamtdatenmenge des Trainingsdatensatzes X, was in der Figur 2 durch die Summenformel veranschaulicht ist. Die Trainingsdaten xₙ sind dabei gelabelt Daten. Die Trainingsdaten x₁ weisen zum Beispiel eine erste Klasse Kₓ₁ auf. Die Trainingsdaten x₂ eine zweite Klasse, beispielsweise Kₓ₂, usw. Die Trainingsdaten xₙ können beispielsweise Bilddaten sein, so dass die Trainingsdaten xₙ pro Klasse eine Vielzahl von Bildern aufweisen. Pro Klasse xₙ liegen also mehrere Trainingsdaten vor, z.B. mehrere Bilder. Die Trainingsdaten X werden in der ersten Trainingsphase P0 verwendet, um das KNN zu trainieren. Zum Abschluss der Trainingsphase P0 hat das KNN eine Klassifikationsaufgabe gelernt, also z.B. den Task x. Das KNN ist nach der ersten Trainingsphase P0 dazu eingerichtet, in das KNN eingegebene Daten in die Klassen x₁ bis xₙ zu unterscheiden. Das KNN ist also nach der Trainingsphase P0 dazu eingerichtet, nicht-gelabelte Daten in die Klassen x₁ bis xₙ zu klassifizieren. Klassifizieren bedeutet wie eingangs beschrieben, das Zuordnen eines unbekannten Datensamples zu einer Datenklasse. Die Datenklasse wird nachfolgend auch als Klasse beschrieben.

In einer weiteren Trainingsphase P1 steht dann der Datensatz Y zum Trainieren des KNN zur Verfügung, der analog zu dem Datensatz X aus mehreren Trainingsdaten y₁ bis yₙ ausgebildet ist, wobei die Trainingsdaten y₁ bis yₙ jeweils den Klassen K_{y1} bis K_{yn} zugordnet sind. In der Trainingsphase P1 lernt das KNN also zusätzlich zu den bereits gelernten Klassen Kₓ₁ bis Kₓₙ, die Klassen K_{y1} bis K_{yn} zu unterscheiden, wobei die Klassen K_{y1} bis K_{yn} von den Klassen Kₓ₁ bis Kₓₙ verschieden sind. Nach der Trainingsphase P1 hat das KNN also gelernt bzw. ist dazu eingerichtet, nicht-gelabelte Daten in die Klassen Kₓ₁ bis Kₓₙ sowie in die Klassen K_{y1} bis K_{yn} zu unterscheiden.

In einer weiteren Trainingsphase P2 steht dann der Datensatz Z zum Trainieren des KNN zur Verfügung, der analog zu den Datensätzen X und Y aus mehreren Trainingsdaten z₁ bis zₙ ausgebildet ist, wobei die Trainingsdaten z₁ bis zₙ jeweils den Klassen K_{z1} bis K_{zn} zugordnet sind. In der Trainingsphase P2 lernt das KNN also zusätzlich zu den bereits gelernten Klassen Kₓ₁ bis K_{yn}, die Klassen K_{z1} bis K_{zn} zu unterscheiden, wobei die Klassen K_{z1} bis K_{zn} von den Klassen Kₓ₁ bis K_{yn} verschieden sind. Nach der Trainingsphase P2 hat das KNN also gelernt bzw. ist dazu eingerichtet, nicht-gelabelte Daten in die Klassen Kₓ₁ bis Kₓₙ sowie in die Klassen K_{y1} bis K_{yn} sowie in die Klassen K_{z1} bis K_{zn} zu unterscheiden.

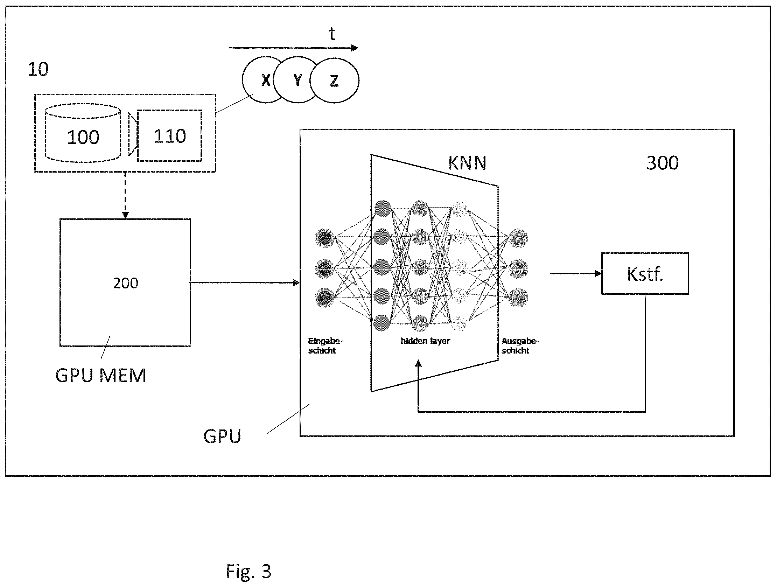

Figur 3 zeigt schematisch ein Computersystem mit einem Wiederholspeicher 200 und einem Trainingsmodul 300 in einer Ausführungsform, die auf oder in einem Computersystem 10 eingerichtet sind. Der Wiederholspeicher 200 ist beispielsweise in einem GPU Speicher GPU MEM implementiert und das Trainingsmodul ist beispielsweise in einer GPU implementiert. Der Wiederholspeicher 200 und das Trainingsmodul sind also funktional miteinander gekoppelt und zum Datenaustausch eingerichtet. In dem Trainingsmodul ist das zu trainierende KNN gespeichert. Zur Veranschaulichung ist dargestellt, dass das KNN eine Eingangsschicht, drei versteckte Schichten und eine Ausgangsschicht aufweist. Das Trainingsmodul 300 ist dazu eingerichtet, dass KNN zu trainieren. Dies ist durch den Block "Kstf." und den Rückwärtspfeil auf die versteckten Schichten veranschaulicht. In dem Trainingsmodul kann beispielsweise eine Kostenfunktion Kstf. hinterlegt sein, die mittels Anpassung von Gewichten des KNN optimiert wird, wobei die Gewichte nicht veranschaulicht sind, bis die Kostenfunktion möglichst minimal ist, wenn eine Verlustfunktion implementiert wird. Wie ein solches Trainieren funktioniert, ist grundsätzlich bekannt.

In der Figur 3 ist zudem dargestellt, dass die Daten X, Y, Z, die als Trainingsdaten bzw. Trainingsdatensätze verstanden werden können, für das Trainieren des KNN mit dem Trainingsmodul 300 in dem Wiederholspeicher 200 bereitgestellt werden. Wie die Daten X,Y,Z ausgebildet sein können, wurde zur Figur 2 beschrieben. Wie zur Figur 1 beschrieben, können die Daten X, Y und Z nach und nach inkrementell in den Wiederholspeicher 200 eingefügt werden, um das inkrementelle Lernverfahren durchzuführen, was durch den Zeitstrahl t in der Figur 3 und der Figur 1 veranschaulicht ist.

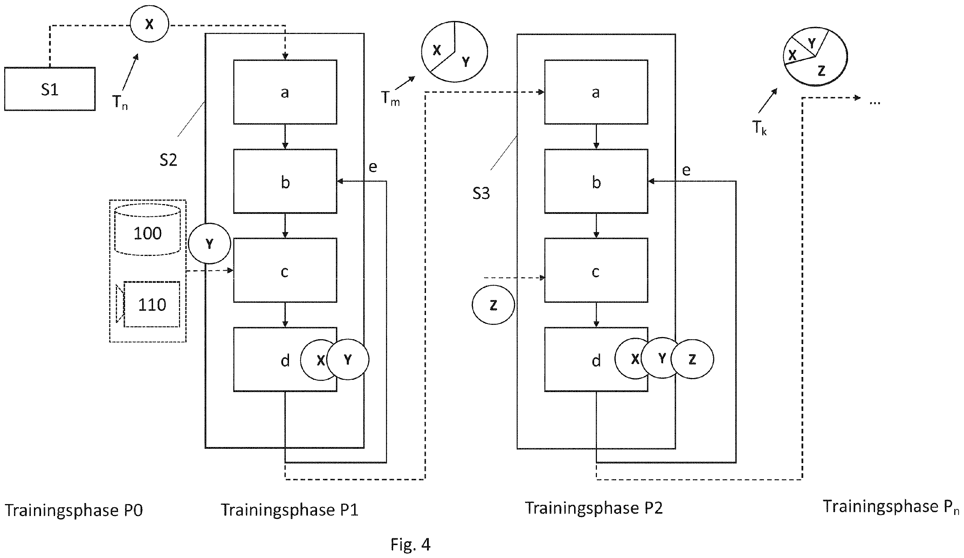

Figur 4 zeigt schematisch ein Ablaufdiagramm des computerimplementierten Verfahrens zum inkrementellen Trainieren eines KNN mit den Schritten S1 bis S3. Die Figur 4 veranschaulicht also das erfindungsgemäße computerimplementierte Verfahren zum inkrementellen Trainieren eines KNN mit einem Trainingsdatensatz X,Y,Z, wobei das KNN in mehreren Trainingsphasen P0, P1, P2 mit einem Trainingsmodul 300 trainiert wird und wobei die mehreren Trainingsphasen in einer zeitlichen Reihenfolge nacheinander erfolgen.

Das Verfahren umfasst den Schritt S1, nämlich Trainieren S1 eines KNN in einer ersten Trainingsphase P0 mit einem gelabelten Trainingsdatensatz X mit dem Trainingsmodul 300, wobei der gelabelte Trainingsdatensatz wenigstens erste Trainingsdaten x₁ aufweist, die einer Datenklasse Kx1 zugeordnet sind, oder Bereitstellen S1 eines trainierten KNN in dem Trainingsmodul 300, das in einer ersten Trainingsphase P0 mit einem gelabelten Trainingsdatensatz X trainiert wurde, wobei der erste Trainingsdatensatz wenigstens erste Trainingsdaten x₁ aufweist, die einer Datenklasse Kₓ₁ zugeordnet sind.

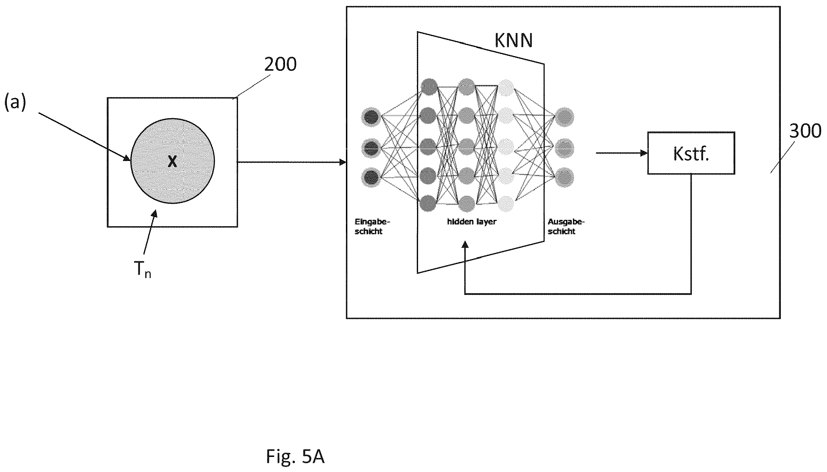

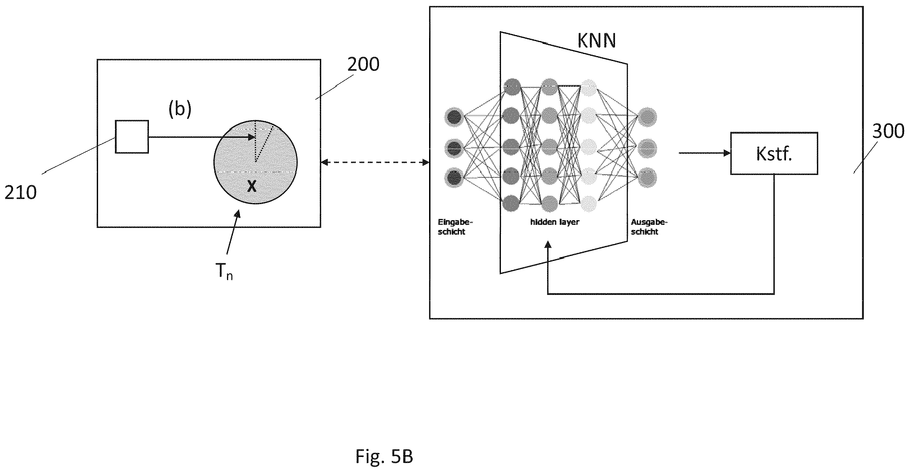

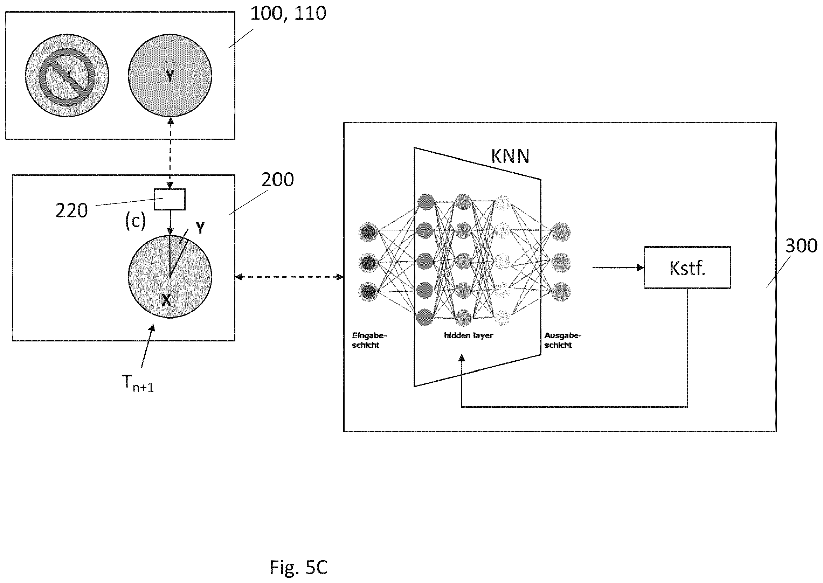

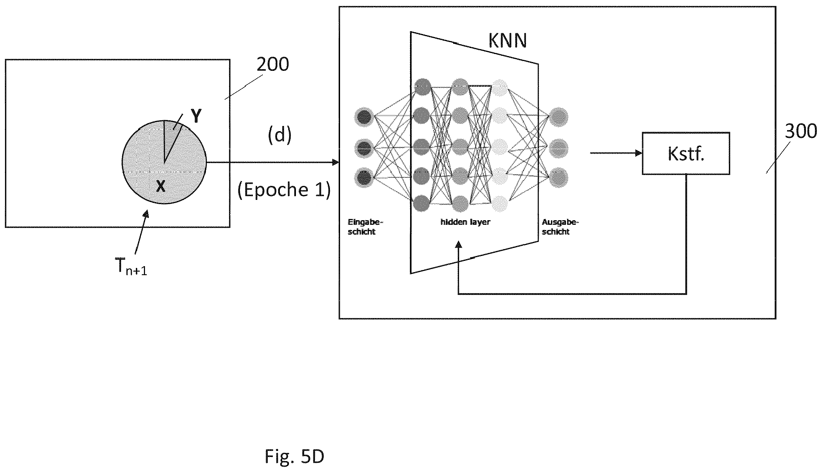

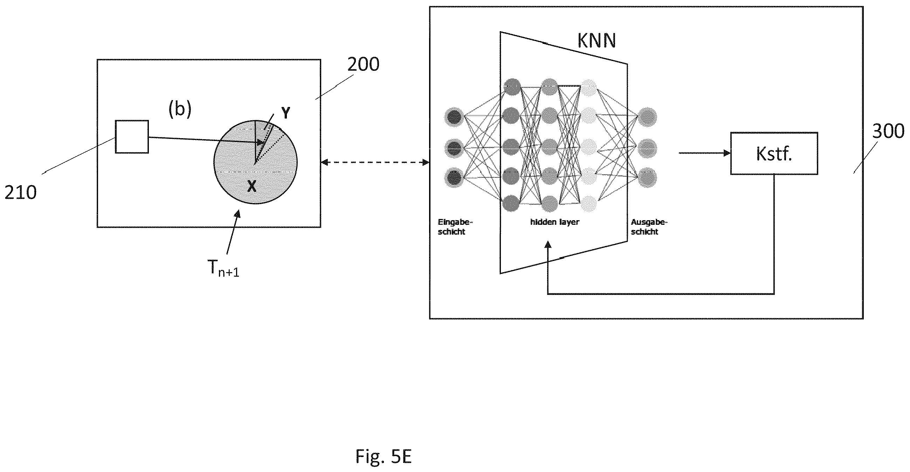

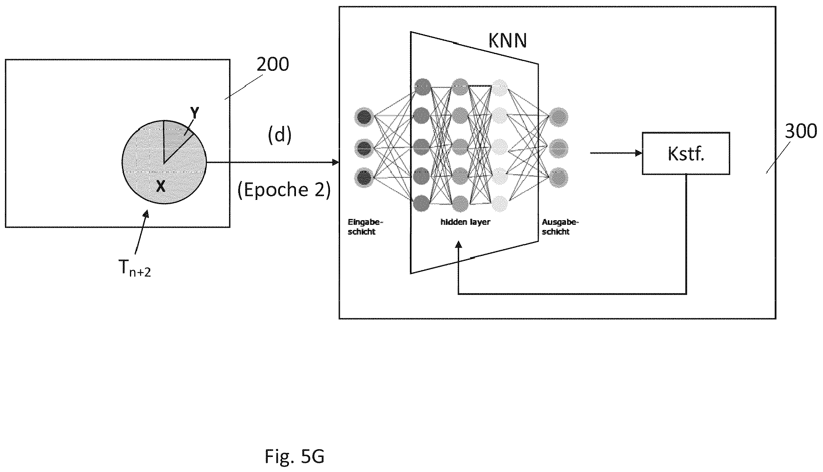

Das Verfahren umfasst zudem den Schritt S2, nämlich Trainieren S2 des KNN in wenigstens einer weiteren Trainingsphase P1, wobei in der weiteren Trainingsphase P1 die folgenden Trainingsschritte erfolgen:
Schritt (a) umfasst:
   Bereitstellen wenigstens eines Teils des gelabelten Trainingsdatensatzes Tₙ zum Trainieren des KNN in einem Wiederholspeicher 200. Der Schritt (a) ist beispielsweise auch in der Figur 5A, 6, 7A und 8 detaillierter veranschaulicht. Das Bereitstellen des gelabelten Trainingsdatensatzes kann dabei durch Aufrufen eines in dem Wiederholspeicher 200 gespeicherten Trainingsdatensatzes erfolgen, und/oder durch Eingeben eines Trainingsdatensatzes aus einem Trainingsdatenspeicher 100, der den Trainingsdatensatz umfasst. Es wird beispielsweise der Datensatz Tₙ in der ersten Trainingsphase P0 bereitgestellt.
Schritt (b) umfasst:
   Entfernen eines Teils der Trainingsdaten aus dem Teil des bereitgestellten Trainingsdatensatzes Tₙ. Der Schritt (b) ist beispielsweise auch in der Figur 5B, 5E, 6, 7B und 8 detaillierter veranschaulicht. Das Entfernen kann dabei beispielsweise mit einem Zufallsalgorithmus willkürlich erfolgen, mit einem Auswahlalgorithmus vorbestimmt sein, oder mit einem Sperralgorithmus durchgeführt werden.
Schritt (c) umfasst:
   Hinzufügen neuer Trainingsdaten in den Teil des Trainingsdatensatzes Tₙ, um einen geänderten Trainingsdatensatz Tₙ₊₁ in dem Wiederholspeicher 200 zum Trainieren des KNN bereitzustellen, wobei eine Menge der neu hinzugefügten Trainingsdaten im Wesentlichen einer Menge der zuvor aus dem Trainingsdatensatz entfernten Trainingsdaten entspricht, um eine Gesamtdatenmenge des Trainingsdatensatz im Wesentlichen gleich zu halten. Der Schritt (c) ist beispielsweise auch in der Figur 5C, 5F, 6, 7C und 8 detaillierter veranschaulicht. Die neu hinzugefügten Trainingsdaten Y und/oder Z können dabei aus einem Trainingsdatenspeicher 100, der die neuen Trainingsdaten umfasst und/oder aus einer Neudatenerfassung 110 entstammen, die mit einem Endgerät dazu eingerichtet, neue Trainingsdaten zu erfassen. Dies ist die gestrichelten Pfeile an den Blöcken c in der Figur 4 veranschaulicht.
Schritt (d) umfasst:
   Trainieren des KNN mit dem geänderten Trainingsdatensatz Tₙ₊₁ mit dem Trainingsmodul 300 für wenigstens eine Trainingsepoche. Der Schritt (d) ist beispielsweise auch in der Figur 5D, 5G, 6, 7D und 8 detaillierter veranschaulicht. Das Trainieren des KNN mit dem bereitgestellten Trainingsdatensatz wird beispielsweise mit dem Trainingsmodul 300 in einer oder allen Trainingsphasen mittels einem überwachten Lernverfahren ausgeführt, bei dem eine Kostenfunktion durch Anpassung von Gewichten des KNN minimiert wird, wie zuvor zur Figur 3 beschrieben.
Schritt (e) umfasst:
   Wiederholen der Schritte (b), (c), und (d) mit dem geänderten Trainingsdatensatz Tₙ₊₁, um das KNN für eine vorbestimmte Anzahl an Trainingsepochen zu trainieren, wobei Schritt (c) wenigstens ein einmaliges Hinzufügen von neuen Daten y₁ aus einer neuen Datenklasse K_{y1} umfasst und wobei die Trainingsphase P1 abgeschlossen ist, wenn eine vorbestimmte Abbruchbedingung erreicht ist, und wobei der in dem Wiederholspeicher 200 gespeicherte geänderte Trainingsdatensatz nach Abschluss der Trainingsphase als Abschlusstrainingsdatensatz Tₘ für eine weitere Trainingsphase P2 bereitgestellt ist. Der Schritt (e) ist beispielsweise auch in der Figur 5E bis 5G, 6 und 8 detaillierter veranschaulicht. Wie in der Figur 4 zu erkennen ist, wird nach Abschluss der Trainingsphase P1 der Abschlussdatensatz Tₘ für die Trainingsphase P2 bereitgestellt.

Das Verfahren umfasst zudem den optionalen Schritt S3:
Trainieren des KNN in wenigstens einer weiteren Trainingsphase P2, wobei in der weiteren Trainingsphase wenigstens die Schritte (b) bis (e) erneut mit dem Abschlusstrainingsdatensatz Tₘ aus der vorherigen Trainingsphase P1 ausgeführt werden. Das Verfahren wird also erneut durchgeführt, mit den neu hinzugefügten Daten Z. Nach Abschluss der weiteren Trainingsphase P2 ist der Abschlusstrainingsdatensatz Tₖ bereitgestellt und kann in einer weiteren Trainingsphase Pₙ verwendet werden. Der Trainingsdatensatz Tₙ kann dabei ebenfalls ein Abschlusstrainingsdatensatz sein oder auch ein erstmalig bereitgestellter initialer Trainingsdatensatz.

Figuren 5A-G veranschaulichen schematisch die jeweiligen Trainingsschritte des computerimplementierten Verfahrens zum inkrementellen Trainieren eines KNN in einer sequenziellen Darstellungsweise und ein Trainieren des KNN in einer ersten Trainingsphase P0.

Figur 5A veranschaulicht den Schritt (a) Bereitstellen wenigstens eines Teils des gelabelten Trainingsdatensatzes Tₙ zum Trainieren des KNN in einem Wiederholspeicher 200. Der Trainingsdatensatzes Tₙ ist beispielsweise ein Teil des Trainingsdatensatzes X, wie zur Figur 2 beschrieben. Es wird also ein Teil des Trainingsdatensatz Tₙ in dem Wiederholspeicher bereitgestellt, insbesondere wie zuvor beschrieben. Der Datensatz Tₙ weist beispielsweise 10 Klassen auf.

Figur 5B veranschaulicht den Schritt (b) Entfernen eines Teils der Trainingsdaten aus dem Teil des bereitgestellten Trainingsdatensatzes Tₙ. Wie zu erkennen ist, wird mit einem Entfernungsmodul 210 ein Teil der Daten aus X gelöscht, was durch einen gepunkteten Bereich im Datensatz Tₙ veranschaulicht ist.

Figur 5C veranschaulicht den Schritt (c) Hinzufügen neuer Trainingsdaten in den Teil des Trainingsdatensatzes Tₙ, um einen geänderten Trainingsdatensatz Tₙ₊₁ in dem Wiederholspeicher 200 zum Trainieren des KNN bereitzustellen, wobei eine Menge der neu hinzugefügten Trainingsdaten im Wesentlichen einer Menge der zuvor aus dem Trainingsdatensatz entfernten Trainingsdaten entspricht, um eine Gesamtdatenmenge des Trainingsdatensatz im Wesentlichen gleich zu halten. Wie zu erkennen ist, werden mit einem Hinzufügungsmodul 220 neue Daten Y in den Datensatz X eingefügt, um den Datensatz Tₙ₊₁ in dem Wiederholspeicher 200 bereitzustellen. Der Datensatz X steht beispielsweise nicht mehr zur Verfügung. Wie in der Figur 5C zu erkennen ist, werden neue Daten Y aus einer neuen Datenklasse (K_{y1}) in den Datensatz X eingefügt. Das Hinzufügen der Daten erfolgt Schritt für Schritt aus dem Datensatz Y und nicht mehr aus dem Datensatz X. Daraus ergibt sich, dass das Hinzufügen wenigstens ein einmaliges Hinzufügen von neuen Daten aus einer neuen Datenklasse umfasst, nämlich aus dem Datensatz Y mit den Trainingsdaten y₁ bis yₙ, die den Trainingsklassen K_{y1} bis K_{yn} zugeordnet sind. Erst in der nächsten Trainingsphase P2 werden neue Datenklassen hinzugefügt. Es wird also vorgeschlagen, dass in der Trainingsphase neue Datenklassen dem gelabelten Trainingsdatensatzes hinzufügt werden.

Figur 5D veranschaulicht den Schritt (d) Trainieren des KNN mit dem geänderten Trainingsdatensatz Tₙ₊₁ mit dem Trainingsmodul 300 für wenigstens eine Trainingsepoche. Wie zu erkennen ist, wird der Trainingsdatensatz Tₙ₊₁ in das KNN eingegeben und das KNN wenigstens eine Epoche mit dem Trainingsdatensatz Tₙ₊₁ trainiert.

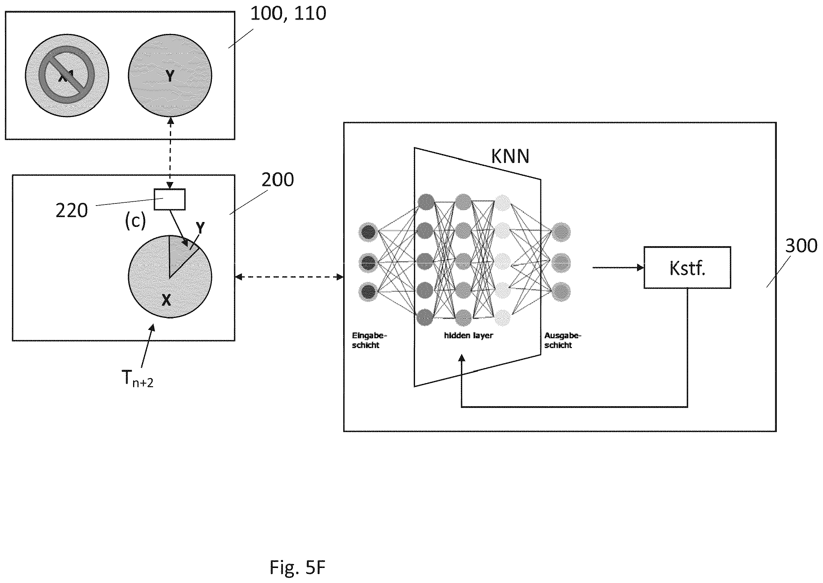

Die Figuren 5E bis 5G veranschaulichen den Schritt (e) Wiederholen der Schritte (b), (c), und (d) mit dem geänderten Trainingsdatensatz Tₙ₊₁, um das KNN für eine vorbestimmte Anzahl (n) an Trainingsepochen zu trainieren. Wie der Figuren 5E zu entnehmen ist, werden mit dem Entfernungsmodul 210 erneut Daten aus dem Datensatz Tₙ₊₁ entfernt. Dabei veranschaulicht die Figur 5E, dass aufgrund des größeren Anteils von X mehr Daten aus dem Anteil X gelöscht werden, als aus dem Anteil Y. Die Figur 5F veranschaulicht, dass die Trainingsdaten X beispielsweise nicht mehr zur Verfügung stehen und nur Daten aus dem Datensatz Y in Schritt (c) in den Datensatz Tₙ₊₁ eingefügt werden, um den Datensatz Tₙ₊₂ zu erzeugen. Anschließend wird erneut das KNN mit dem Trainingsmodul in wenigstens einer weiteren Epoche mit dem Datensatz Tₙ₊₂ trainiert. Die Schritte, die in den Figuren 5E bis 5G veranschaulicht sind, finden also in derselben Trainingsphase statt.

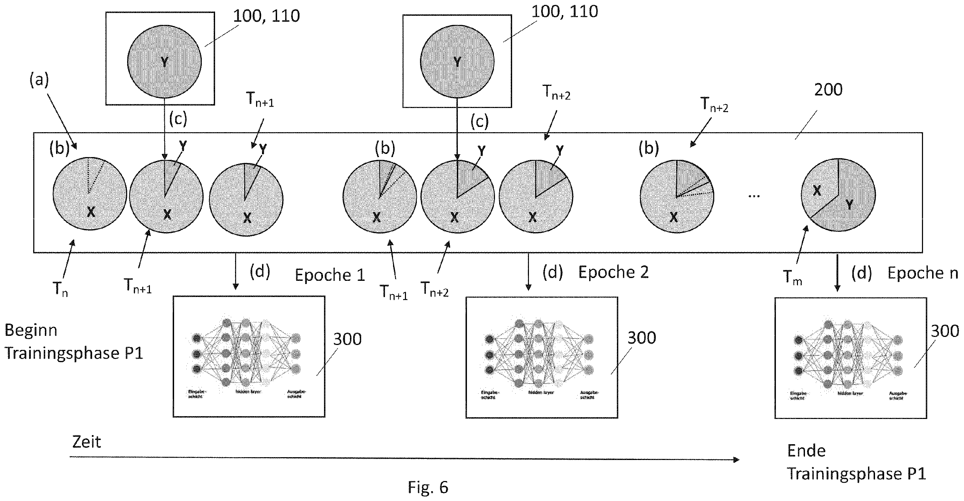

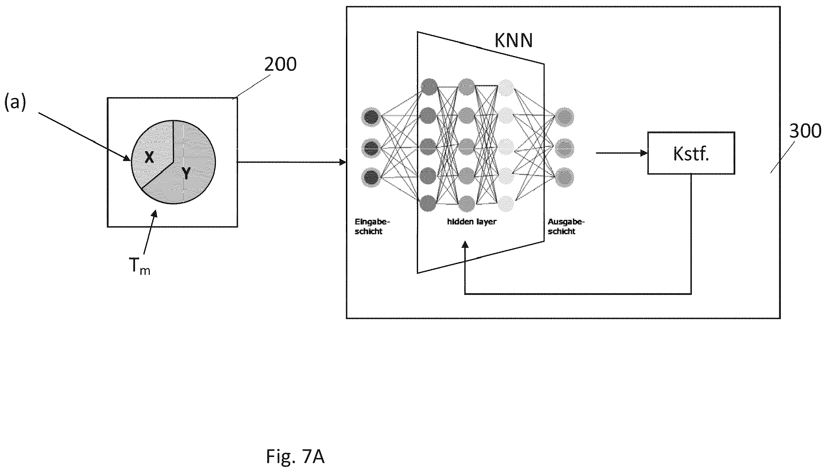

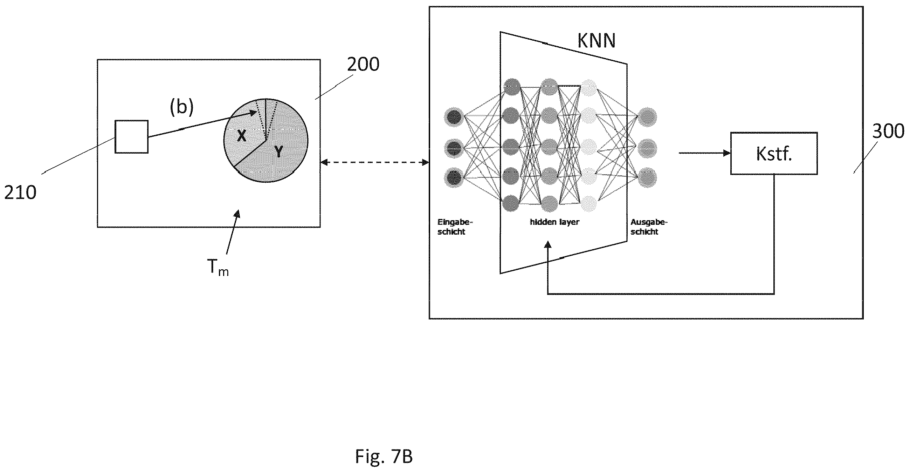

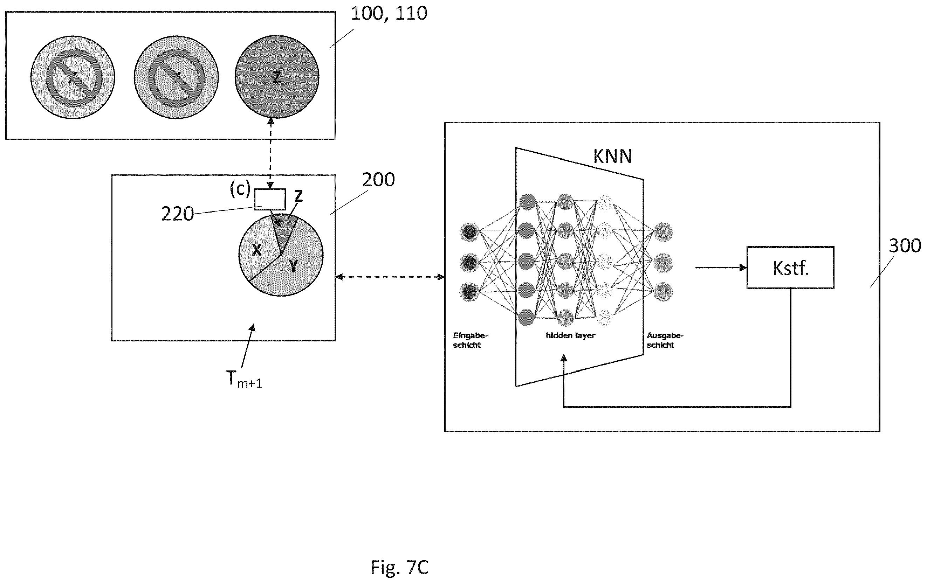

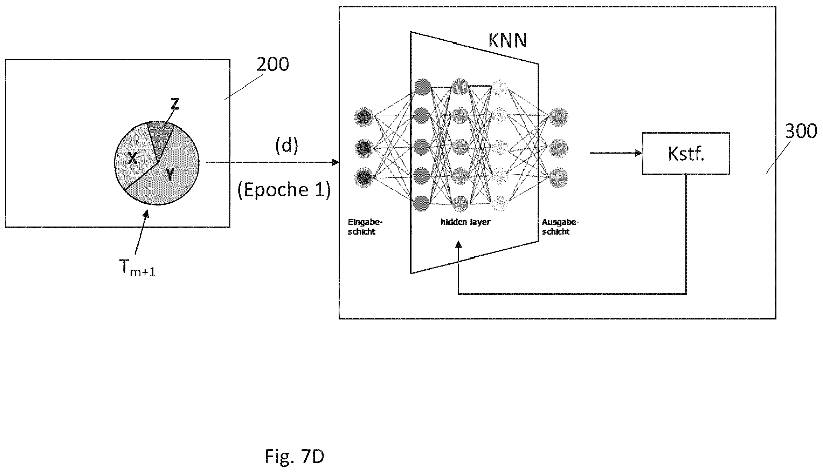

Figur 6 veranschaulicht schematisch die jeweiligen Trainingsschritte des computerimplementierten Verfahrens zum inkrementellen Trainieren eines KNN in einer zeitlichen Übersichtsdarstellung und die weitere Trainingsphase P1. Im Grunde veranschaulicht die Figur 7 die Figuren 6A bis 6G oder die Trainingsphase P1 aus der Figur 4. Der Figur 7 ist zu entnehmen, dass die Trainingsphase P1 mit dem Schritt (a) beginnt, also der Datensatz Tₙ in dem Wiederholspeicher 200 bereitgestellt wird, der die Klassen Kₓ₁ bis Kₓₙ umfasst. Anschließend erfolgt in Schritt (b) ein Entfernen eines Teils Daten aus dem Datensatz Tₙ. In Schritt (c) werden dann dem Datensatz Tₙ neue Daten Y hinzugefügt, die neue Klassen K_{y1} bis K_{yn} umfassen. In Schritt (d) wird das KNN mit dem Trainingsmodul 300 auf Basis des Datensatzes Tₙ₊₁ trainiert. Anschließend wiederholen sich die Schritte (b) bis (d) n-fach, bis nach einer vorbestimmten Anzahl von Epochen n der in dem Wiederholspeicher 200 gespeicherte geänderte Trainingsdatensatz nach Abschluss der Trainingsphase als Abschlusstrainingsdatensatz Tₘ für eine weitere Trainingsphase bereitgestellt ist. Die Trainingsphase ist abgeschlossen, wenn eine Abbruchbedingung erfüllt ist, beispielsweise, wenn das KNN für 90 Trainingsepochen trainiert wurde. Nach Erreichen der Abbruchbedingung liegt also der Datensatz Tₘ vor.

Figuren 7A-D veranschaulichen schematisch die jeweiligen Trainingsschritte des computerimplementiertes Verfahren zum inkrementellen Trainieren eines KNN in einer sequenziellen Darstellungsweise und ein Trainieren des KNN in einer weiteren Trainingsphase P2.

Figur 7A veranschaulicht den Schritt (a) Bereitstellen wenigstens eines Teils des gelabelten Trainingsdatensatzes Tₘ zum Trainieren des KNN in einem Wiederholspeicher 200, wie zuvor beschrieben. Es wird also der ein Trainingsdatensatz Tₘ in dem Wiederholspeicher 200 bereitgestellt, wie insbesondere zuvor beschrieben. Der Datensatz Tₘ ist beispielsweise ein Abschlusstrainingsdatensatz Tₘ aus der zuvor beschrieben Trainingsphase P1, die in den Figuren 5A-5G und der Figur 6 beschrieben wurden. Der Datensatz Tₘ weist beispielsweise 20 Klassen auf.

Figur 7B veranschaulicht den Schritt (b) Entfernen eines Teils der Trainingsdaten aus dem Teil des bereitgestellten Trainingsdatensatzes Tₘ. Wie zu erkennen ist, wird mit einem Entfernungsmodul 210 ein Teil der Daten aus X und Y gelöscht, was durch einen gepunkteten Bereich veranschaulicht ist im Datensatz Tₘ veranschaulicht ist.

Figur 7C veranschaulicht den Schritt (c) Hinzufügen neuer Trainingsdaten in den Teil des Trainingsdatensatzes Tₘ, um einen geänderten Trainingsdatensatz Tₘ₊₁ in dem Wiederholspeicher 200 zum Trainieren des KNN bereitzustellen, wobei eine Menge der neu hinzugefügten Trainingsdaten im Wesentlichen einer Menge der zuvor aus dem Trainingsdatensatz entfernten Trainingsdaten entspricht, um eine Gesamtdatenmenge des Trainingsdatensatz im Wesentlichen gleich zu halten. Wie zu erkennen ist, werden mit einem Hinzufügungsmodul 220 neue Daten Z in den Datensatz Tₘ eingefügt, um den Datensatz Tₘ₊₁ in dem Wiederholspeicher 200 bereitzustellen. Die Datensätze X und Y stehen beispielsweise nicht mehr zur Verfügung.

Figur 7D veranschaulicht den Schritt (d) Trainieren des KNN mit dem geänderten Trainingsdatensatz Tₘ₊₁ mit dem Trainingsmodul 300 für wenigstens eine Trainingsepoche. Wie zu erkennen ist, wird der Trainingsdatensatz Tₘ₊₁ in das KNN eingegeben und das KNN wenigstens eine Epoche mit dem Trainingsdatensatz Tₘ₊₁ trainiert.

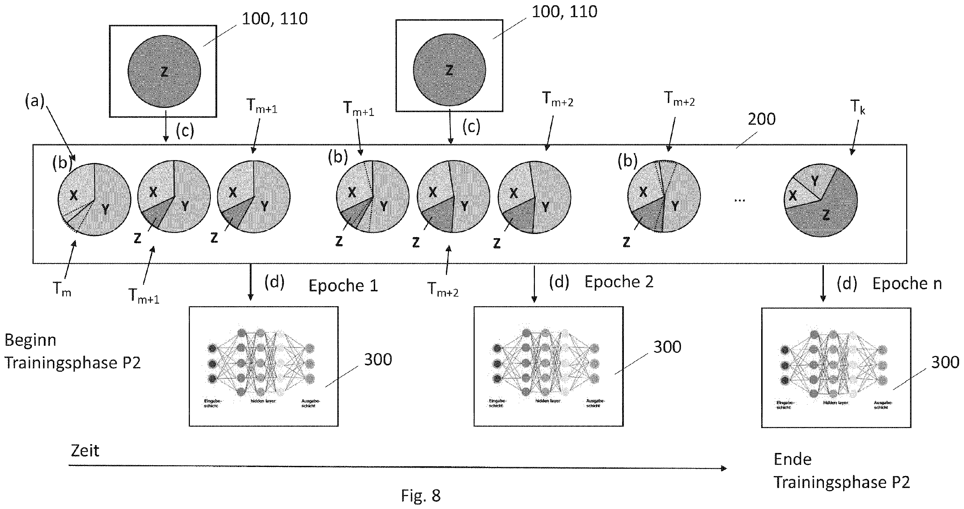

Figur 8 veranschaulicht schematisch die jeweiligen Trainingsschritte des computerimplementierten Verfahrens zum inkrementellen Trainieren eines KNN in einer zeitlichen Übersichtsdarstellung und eine weitere Trainingsphase P2. Das Prinzip der Figur 8 entspricht dem Prinzip der Figur 6. Figur 8 veranschaulicht schematisch die jeweiligen Trainingsschritte des computerimplementierte Verfahren zum inkrementellen Trainieren eines KNN in einer zeitlichen Übersichtsdarstellung in einer weiteren Trainingsphase P2. Im Grunde veranschaulicht die Figur 6 die Figuren 7A bis 7D oder die weitere Trainingsphase P2 aus der Figur 4. Der Figur 8 ist zu entnehmen, dass die Trainingsphase P2 mit dem Schritt (a) beginnt, also der Datensatz Tₘ in dem Wiederholspeicher 200 bereitgestellt wird, der die Klassen Kₓ₁ bis Kₓₙ, und K_{y1} bis K_{yn} umfasst. Anschließend erfolgt in Schritt (b) ein Entfernen eines Teils Daten aus dem Datensatz Tₘ. Wie zu erkennen ist, werden sowohl X Daten als auch Y Daten aus dem Datensatz entfernt. Dies ist ebenfalls im Schritt (b) zum Datensatz Tₘ₊₁ zu erkennen. Dort werden Daten anteilig aus den Datensätzen X, Y und Z entfernt. Aufgrund der Tatsache, dass mehr Y Daten in dem Datensatz Tₘ vorhanden sind, wird ein größerer Anteil von Y entfernt als X. In Schritt (c) werden dann dem Datensatz Tₘ neue Daten Z hinzugefügt, die neue Klassen K_{zn} umfassen. In Schritt (d) wird das KNN mit dem Trainingsmodul 300 auf Basis des Datensatzes Tₘ₊₁ trainiert. Anschließend wiederholen sich die Schritte (b) bis (d) n-fach, bis nach einer vorbestimmten Anzahl von Epochen n der in dem Wiederholspeicher 200 der gespeicherte geänderte Trainingsdatensatz nach Abschluss der Trainingsphase als Abschlusstrainingsdatensatz Tₖ für eine weitere Trainingsphase bereitgestellt ist.

Das zuvor beschrieben Verfahren kann also für beliebig viele Trainingsphasen wiederholt werden und es werden jeweils die vorherigen Daten aus den vorherigen Trainingsphasen berücksichtigt.

## Patentansprüche

1. Computerimplementiertes Verfahren zum inkrementellen Trainieren eines künstlichen neuronalen Netzes (KNN) mit einem Trainingsdatensatz, wobei das KNN in mehreren Trainingsphasen mit einem Trainingsmodul (300) trainiert wird und wobei die mehreren Trainingsphasen in einer zeitlichen Reihenfolge nacheinander erfolgen, umfassend die Schritte:
- Trainieren (S1) eines KNN in einer ersten Trainingsphase (P0) mit einem gelabelten Trainingsdatensatz (X) mit dem Trainingsmodul (300), wobei der gelabelte Trainingsdatensatz wenigstens erste Trainingsdaten (x₁) aufweist, die einer Datenklasse (Kₓ₁) zugeordnet sind, oder
- Bereitstellen (S1) eines trainierten KNN in dem Trainingsmodul (300), das in einer ersten Trainingsphase (P0) mit einem gelabelten Trainingsdatensatz (X) trainiert wurde, wobei der gelabelte Trainingsdatensatz wenigstens erste Trainingsdaten (x₁) aufweist, die einer Datenklasse (Kₓ₁) zugeordnet sind, und
- Trainieren (S2) des KNN in wenigstens einer weiteren Trainingsphase (P1), wobei in der weiteren Trainingsphase die folgenden Trainingsschritte erfolgen:
(a) Bereitstellen wenigstens eines Teils des gelabelten Trainingsdatensatzes (Tₙ) zum Trainieren des KNN in einem Wiederholspeicher (200),
(b) Entfernen eines Teils der Trainingsdaten aus dem Teil des bereitgestellten Trainingsdatensatzes (Tₙ),
(c) Hinzufügen neuer Trainingsdaten in den Teil des Trainingsdatensatzes (Tₙ), um einen geänderten Trainingsdatensatz (Tₙ₊₁) in dem Wiederholspeicher (200) zum Trainieren des KNN bereitzustellen, und
(d) Trainieren des KNN mit dem geänderten Trainingsdatensatz (Tₙ₊₁) mit dem Trainingsmodul (300) für wenigstens eine Trainingsepoche, und
(e) Wiederholen der Schritte (b), (c), und (d) mit dem geänderten Trainingsdatensatz (Tₙ₊₁), um das KNN für eine vorbestimmte Anzahl (n) an Trainingsepochen zu trainieren, wobei Schritt (c) wenigstens ein einmaliges Hinzufügen von neuen Daten (y₁) aus einer neuen Datenklasse (K_{y1}) umfasst und wobei die weitere Trainingsphase (P1) abgeschlossen ist, wenn eine vorbestimmte Abbruchbedingung erreicht ist, und wobei der in dem Wiederholspeicher (200) gespeicherte geänderte Trainingsdatensatz nach Abschluss der Trainingsphase als Abschlusstrainingsdatensatz (Tₘ) für eine weitere Trainingsphase (P2) bereitgestellt ist; und
- optional Trainieren (S3) des KNN in wenigstens einer weiteren Trainingsphase (P2), wobei in der weiteren Trainingsphase wenigstens die Schritte (b) bis (e) erneut mit dem Abschlusstrainingsdatensatz (Tₘ) aus der vorherigen Trainingsphase (P1) ausgeführt werden.

2. Verfahren nach Anspruch 1, wobei das Entfernen des Teils der Daten aus dem Trainingsdatensatz des Wiederholspeichers (200) in Schritt (b) den Schritt umfasst:
- Ausführen eines Zufallsalgorithmus, der beliebige Daten aus dem Trainingsdatensatz zufällig entfernt; und/oder
- Ausführen eines Auswahlalgorithmus, der vorbestimmte Daten aus dem Trainingsdatensatz auf Basis einer Auswahlvorschrift entfernt, wobei
weiter bevorzugt
(i) der Auswahlalgorithmus ein Algorithmus ist, der eine Klassenverteilung in dem Trainingsdatensatz feststellt und ein Entfernen der Daten auf Basis der festgestellten Klassenverteilung durchführt, und/oder
(ii) der Auswahlalgorithmus ein Algorithmus ist, der mit Klassenminimalgrenzen dazu eingerichtet ist, ein vollständiges Entfernen von Daten einer Datenklasse aus dem Trainingsdatensatz zu verhindern; und/oder
(iii) der Auswahlalgorithmus ein Algorithmus, der eine zeitliche Reihenfolge der Daten des Trainingsdatensatzes feststellt und ein Entfernen der Daten auf Basis der festgestellten zeitlichen Reihenfolge durchführt;
- Ausführen eines Sperralgorithmus, der neu hinzugefügte Daten aus dem Trainingsdatensatz für eine vorbestimmte Zeit gegen ein Entfernen sperrt und nicht gesperrte Daten ganz oder teilweise aus dem Trainingsdatensatz entfernt,

3. Verfahren nach Anspruch 1 oder 2, wobei das Hinzufügen neuer Trainingsdaten in den Trainingsdatensatz (Tₙ) in Schritt (c) den Schritt umfasst:
- Hinzufügen neuer Trainingsdaten aus einem Trainingsdatenspeicher (100), der die neuen Trainingsdaten umfasst, und/oder
- Hinzufügen neuer Trainingsdaten aus einer Neudatenerfassung (110), wobei die Neudatenerfassung vorzugsweise mit einem Endgerät dazu eingerichtet ist, neue Trainingsdaten zu erfassen, wobei das Endgerät insbesondere ein Kamerasystem ist.

4. Verfahren nach einem der vorstehenden Ansprüche, wobei eine Menge der neu hinzugefügten Trainingsdaten im Wesentlichen einer Menge, der zuvor aus dem Trainingsdatensatz entfernten Trainingsdaten entspricht, um eine Gesamtdatenmenge des Trainingsdatensatzes im Wesentlichen gleich zu halten.

5. Verfahren nach einem der vorstehenden Ansprüche, wobei das Bereitstellen des wenigstens einen Teils des gelabelten Trainingsdatensatzes (Tₙ,) in Schritt (a) den zusätzlichen Schritt umfasst:
- Auswählen des wenigstens einen Teils des gelabelten Trainingsdatensatzes (Tₙ) mit einer Auswahleinrichtung, so dass eine ausgewählte Gesamtdatenmenge des ausgewählten Teils (Tₙ) im Wesentlichen der maximalen Datenspeicherkapazität des Wiederholspeichers entspricht.

6. Verfahren nach einem der vorstehenden Ansprüche, wobei das Trainieren des KNN in der ersten Trainingsphase (P0) und/oder in der weiteren Trainingsphase (P1,P2) mit einem Computersystem (10) ausgeführt wird, das wenigstens den Wiederholspeicher (200) und das Trainingsmodul (300) umfasst, wobei das Computersystem (10) vorzugsweise mit einer GPU und/oder einer CPU zum Ausführen des Verfahren eingerichtet ist.

7. Verfahren nach einem der vorstehenden Ansprüche, wobei das in der ersten Trainingsphase (P0) und/oder das in der weiteren Trainingsphase (P1, P2) zu trainierende KNN ein tiefes KNN ist, das vorzugsweise zur Bildklassifikation eingerichtet ist, insbesondere ist das tiefe KNN ein faltendes KNN (CNN), ein rekurrentes neuronales Netz (RNN), ein residuales neuronales Netz (ResNet) oder dergleichen.

8. Verfahren nach einem der vorstehenden Ansprüche, wobei das Trainieren des KNN in einer oder allen Trainingsphasen (P0, P1, P2) mittels einem überwachten Lernverfahren erfolgt, bei dem eine Kostenfunktion durch Anpassung von Gewichten des KNN optimiert wird, wobei vorzugsweise die Kostenfunktion mittels einem Optimierungsverfahren optimiert wird, insbesondere mit einem Gradientenabstiegsverfahren, einem Stochastischen Gradientenabstieg, einem Batch-Gradientenabstieg, einem Mini-Batch-Gradientenabstieg, einem Levenberg-Marquardt Algorithmus oder dergleichen.

9. Verfahren nach einem der vorstehenden Ansprüche, wobei der Trainingsdatensatz eine Vielzahl von Trainingsdaten (x1,..., xₙ) aufweist, die jeweils einer Vielzahl erster Datenklassen (Kₓ₁,...,Kₓₙ) zugeordnet sind, und die neu hinzugefügten Trainingsdaten eine Vielzahl von Trainingsdaten (y₁,..., yₙ) umfassen, die jeweils einer Vielzahl zweiter Datenklassen (K_{y1},...,K_{yn}) zugeordnet sind, wobei vorzugsweise die ersten Datenklassen von den zweiten Datenklassen verschieden sind.

10. Verfahren nach einem der vorstehenden Ansprüche, wobei der gelabelte Trainingsdatensatz ein Bilddatensatz ist, und die Trainingsdaten gelabelte Bilddaten sind.

11. Verfahren nach einem der vorstehenden Ansprüche, wobei die Abbruchbedingung
- ein Erreichen einer vorbestimmten Anzahl an Trainingsepochen in einer Trainingsphase ist, und/oder
- ein Erreichen einer vorbestimmten Zeitdauer ist, und/oder
- ein Erreichen einer vorbestimmten Klassifikationsgenauigkeit ist, die mit einem Testdatensatz geprüft wird, der in das KNN eingegeben wird, und/oder
- ein Erreichen eines vorbestimmten Schwellenwertes für eine Kostenfunktion.

12. Computersystem (10) zum inkrementellen Trainieren eines künstlichen neuronalen Netzes (KNN), insbesondere Computer Vision System, mit einem Wiederholspeicher (200) und mit einem Trainingsmodul (300), wobei das Computersystem (10) mit dem Wiederholspeicher (200) und dem Trainingsmodul (300) zum Ausführen des Verfahrens nach Anspruch 1 bis 11 eingerichtet ist.

13. Computersystem (10) nach Anspruch 12, wobei der Wiederholspeicher (200) und das Trainingsmodul (300) in einer GPU oder in einer CPU eingerichtet sind.
